(19) **Europäisches Patentamt**

**European Patent Office**

**Office européen des brevets**

(11) **EP 1 080 867 B1**

(12) **EUROPÄISCHE PATENTSCHRIFT**

(45) Veröffentlichungstag und Bekanntmachung des Hinweises auf die Patenterteilung:
**15.12.2004 Patentblatt 2004/51**

(51) Int Cl.$^7$: **B29C 47/52**, B29C 47/92, F04C 2/08

(21) Anmeldenummer: **00118036.3**

(22) Anmeldetag: **23.08.2000**

(54) **Verfahren zum dosierten Ausbringen eines Stranges eines viskosen Mediums und Förderpumpe zur Durchführung dieses Verfahrens**

Method for dosed distribution of a strand formed from a viscous material and metering pump for carrying out said method

Procédé pour la distribution dosée d'une barre à partir d'une matière visqueuse et pompe d'alimentation pour la mise en oeuvre de ce procédé

(84) Benannte Vertragsstaaten:
**AT BE CH CY DE DK ES FI FR GB GR IE IT LI LU MC NL PT SE**

(30) Priorität: **03.09.1999 DE 19942219**
**26.04.2000 DE 10020295**

(43) Veröffentlichungstag der Anmeldung:
**07.03.2001 Patentblatt 2001/10**

(73) Patentinhaber: **DATRON-ELECTRONIC GmbH D-64367 Mühltal (DE)**

(72) Erfinder:
• **Becker, Manfred**
**64372 Ober-Ramstadt (DE)**
• **Gerner, Bernd**
**69483 Wald-Michelbach (DE)**
• **Hovy, Hendrik**
**64367 Mühltal (DE)**
• **Sowa, Erwin**
**64665 Alsbach (DE)**

• **Reck, Matthias**
**64372 Ober-Ramstadt (DE)**

(74) Vertreter: **Jakelski, Joachim, Dr.**
**Otte & Jakelski Patentanwälte**
**Mollenbachstrasse 37**
**71229 Leonberg (DE)**

(56) Entgegenhaltungen:
**EP-A- 0 559 582**      **EP-A- 0 577 062**
**EP-A- 1 027 979**      **WO-A-87/00480**
**WO-A-98/51405**      **DE-C- 871 352**
**GB-A- 750 856**      **US-A- 6 054 077**

• **PATENT ABSTRACTS OF JAPAN vol. 1998, no. 14, 31. Dezember 1998 (1998-12-31) & JP 10 249919 A (TAKIKAWA ENG KK), 22. September 1998 (1998-09-22)**
• **PATENT ABSTRACTS OF JAPAN vol. 1998, no. 12, 31. Oktober 1998 (1998-10-31) & JP 10 193474 A (BRIDGESTONE CORP), 28. Juli 1998 (1998-07-28)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft ein Verfahren und eine Förderpumpe zum dosierten Ausbringen eines Stranges eines viskosen Mediums gemäß den Oberbegriffen der Ansprüche 1 und 3.

Aus der FR-A-2399559 ist eine Förderpumpe bekannt mit zwei zur Ausführung einer gegenläufigen Drehung angetriebenen, in einem Gehäuse angeordneten Zahnrädern. Hierbei wird nur ein Zahnrad angetrieben, das andere Zahnrad wird dagegen durch das angetriebene Zahnrad in Bewegung versetzt. Hierzu ist dieses Zahnrad in einem Teilbereich so ausgebildet, daß die beiden Zahnräder kämmen. In einem weiteren Teilbereich dagegen weisen die Zahnräder einen Abstand auf, dessen Größe von der Drehstellung der beiden Zahnräder abhängt. Insbesondere beim Verarbeiten von abrasiven, feste Partikel enthaltenden Medien, ist eine solche Anordnung problematisch, da insbesondere im kämmmenden Bereich der Zahnräder durch das feste Partikel enthaltende, abrasive Medium Störungen auftreten können.

Ein Verfahren zum dosierten Ausbringen eines Stranges eines viskosen Mediums ist ferner aus der WO 98/51405 A1 bekannt.

Die EP 0 559 582 A1 offenbart eine Förderpumpe für hochviskose Materialien mit zwei gegenläufig rotierenden kämmenden Zahnrädern. Gerade bei der Verwendung von abrasiven Medien ist jedoch ein Kämmen der Zahnräder problematisch, da nicht ausgeschlossen werden kann, daß durch das abrasive Medium die Zahnräder, beispielsweise durch an den Zahnrädern haftende abrasive Partikel aufgrund der Berührung beschädigt werden können.

Eine Vorrichtung zum dosierten Extrudieren eines Stranges eines viskosen Mediums geht ferner aus der DE 196 47 015 C1 hervor. Bei dieser Vorrichtung wird eine Kolbenpumpe verwendet. Der Extrusionshub des Kolben der Kolbenpumpe wird präzise gesteuert, indem die Kolbenpumpe über ein hochviskoses Hydraulikfluid mit einer Zahnradpumpe hydraulisch gekoppelt ist. Die hierfür verwendeten Zahnradpumpen zeichnen sich durch eine hohe Konstanz der Förderleistung und damit des extrudierten Stranges aus, wobei auch der Beginn des Austragens genau kontrollierbar ist. Sie eigenen sich jedoch nicht für die Extrusion von abrasiven Medien, zum Beispiel von mit einem hohen prozentualen Anteil mit Silberflokken angereicherten Dichtungsmassen, wie sie beispielsweise zur HF-Abdichtung von Hochfrequenzgehäusen verwendet werden.

Aus der DE 197 33 627 C1 sind derartige Dichtungen bekannt.

Herkömmliche Verfahren und Vorrichtungen zum dosierten Aufbringen von viskosen Medien, sogenannte Dispenser-Maschinen, arbeiten mit Druck/Zeit-gesteuerten Prinzipien. Diese haben den Nachteil, dass der Volumenstrom der zu dosierenden Masse nicht proportional zur Verfahrgeschwindigkeit gesteuert werden kann. Da die Antriebe der den Dosierkopf bewegenden Koordinatentische in den meisten Fällen in Rampen beschleunigen, entstehen in Beschleunigungs- und Bremsphasen ungleichmäßige Dosierraupenquerschnitte.

Aufgabe der vorliegenden Erfindung ist es, ein Verfahren und eine Förderpumpe zum dosierten Ausbringen eines Stranges eines viskosen Mediums, insbesondere eines feste Partikel enthaltenden abrasiven Mediums, so weiterzubilden, daß bei hoher Verfahrgeschwindigkeit und insbesondere auch bei wechselnden Geschwindigkeiten, wie sie bei Radien etc. auftreten, mittels der das Medium ausbringenden Düse sehr präzise Auftragsquerschnitte (Raupen) erzielbar sind. Diese Aufgabe wird erfindungsgemäß durch ein Verfahren zum dosierten Ausbringen eines Stranges eines viskosen Mediums mit den Merkmalen des Anspruchs 1 und durch eine Förderpumpe zum Ausbringen eines Stranges eines viskosen Mediums pro Wegeinheit mit den Merkmalen des Anspruchs 3 gelöst.

Der Grundgedanke der Erfindung besteht darin, ein Verfahren zu vermitteln, bei dem unabhängig von der Verfahrgeschwindigkeit der Düse immer eine gleichbleibende Menge des viskosen Mediums ausgebracht wird. Dies wird dadurch erreicht, dass man die Menge des Mediums proportional zur Geschwindigkeit der Düse ausbringt und in Abhängigkeit von der Beschleunigung oder Verzögerung der Düse erhöht bzw. verringert, wobei die ausgebrachte Menge proportional ist zur mit einem Mengenfaktor multiplizierten Summe aus der Geschwindigkeit der Düse, der mit einem Faktor A multiplizierten Beschleunigung der Düse und dem mit einem weiteren Faktor B multiplizierten Geschwindigkeitsquadrat der Düse:

Menge Faktor • (Geschwindigkeit der Düse + Beschleunigung • Faktor A + Geschwindigkeitsquadrat • Faktor B).

Hierdurch ist es möglich, auch beispielsweise bei dem Ausbringen einer gekrümmten Raupe, bei der die das Medium ausbringende Düse verzögert wird oder bei Ausbringen einer geradlinigen Raupe, bei der die Düse beschleunigt wird, mit großer Exaktheit immer den gleichen Raupenquerschnitt des Mediums zu erzielen.

Die ausgebrachte Menge kann damit im wesentlichen durch drei Faktoren verändert werden. Der Mengenfaktor verändert die insgesamt auszutragende Menge, durch ihn kann festgelegt werden, ob die auszubringende Raupe dicker oder dünner ist. Der Faktor A gleicht die dynamischen Materialeigenschaften aus. Er berücksichtigt insbesondere, ob sich die zähflüssige Menge nichtnewtonsch, z.B. wie ein thixotropes Medium, wie ein dilatantes Medium oder aber wie ein Newton'sches Medium verhält. Der Faktor B gleicht eine geschwindigkeitsabhängige Nichtlinearität aus, die beispielsweise durch eine Leckage in der Pumpe und durch das Materialverhalten (Viskosität) des auszubringenden Mediums bestimmt wird.

Die Konstanten werden vorzugsweise abhängig von dem auszubringenden Material messtechnisch bestimmt.

Hierfür eignet sich in besonderem Maße die erfindungsgemäße Förderpumpe zum Ausbringen eines Stranges eines viskosen Mediums. Ihr liegt der Grundgedanke zugrunde, einerseits die präzisen Dosiermöglichkeiten einer Zahnradpumpe zu verwenden und es andererseits zu ermöglichen, auch abrasive Medien zu verarbeiten. Gerade durch eine Förderpumpe mit zwei zur Ausführung einer gegenläufigen Drehung angetriebenen, annähernd sinusförmig verzahnten in einem Gehäuse sowohl zu Gehäusewänden als auch untereinander beabstandet angeordneten Zahnrädern, wobei jeweils einem Zahn eine Ausnehmung gegenüberliegt, die zu dem Zahn komplementär ausgebildet ist, aber einen größeren Radius aufweist, so daß sich zwischen dem Zahn und den Ausnehmungen ein Spalt konstanter Spaltbreite ausbildet, kann die Menge in Abhängigkeit von der Verfahrgeschwindigkeit und von der Verfahrbeschleunigung bzw. Verzögerung der Düse präzise eingestellt werden.

Dadurch, daß die Zahnräder sowohl zu den Gehäusewänden als auch untereinander jeweils Spalte bilden, deren Spaltgröße an die Partikelgröße angepasst ist, wird auf sehr vorteilhafte Weise insbesondere eine Beschädigung der Zahnräder durch das abrasive Medium vermieden. Durch den definierten gleichen Abstand zwischen den. Zähnen der beiden Zahnräder findet auch ein Druckausgleich im Bereich der auseinanderlaufenden bzw. zusammenlaufenden Zähne der Zahnräder der Zahnradpumpe statt.

Um zudem bei Verwendung von abrasiven Medien eine Beschädigung der Pumpe durch ein "Festfressen", welches durch Sintervorgänge der in dem Medium gebundenen Partikel entsteht, zu vermeiden, sind sowohl in einem Gehäusedeckel als auch in einem Gehäuseboden des Gehäuses jeweils eine von den beiden Zahnrädern gleich beabstandete Nut angeordnet.

Vorteilhafterweise fluchten die Nuten mit dem Einlass und dem Auslass der Förderpumpe und erstrecken sich eine vorgegebene Länge in dem Gehäuseboden bzw. Gehäusedeckel.

Um einen möglichst reibungsarmen Lauf der Zahnräder zu ermöglichen, weisen diese an ihrer Ober- und Unterkante einen im wesentlichen kreisrunden stegförmigen Abstandsring auf, der an dem Gehäuseboden bzw. Gehäusedeckel anliegt. Darüber hinaus können die Zahnräder im Querschnitt auch stegförmig ausgebildet sein, so dass stegförmige Abstandsringe entfallen können.

Die Zahnräder bestehen vorzugsweise aus einem oder mehreren der folgenden Materialien: Kunststoff, Keramik antihaftbeschichtetes Metall, durch harte anodische Beschichtung beschichtetes Metall, wobei die Beschichtungen härter sind als die abrasiven Medien. Um ein Berühren der Zahnräder zu vermeiden und um sicherzustellen, dass ein Spalt zwischen den Zahnrädern angeordnet ist, werden sie durch ein Vorschaltgetriebe synchron gegenläufig zueinander angetrieben derart, dass sich ein Spalt zwischen den beiden Zahnrädern bildet.

Weitere Vorteile und Merkmale der Erfindung sind Gegenstand der nachfolgenden Beschreibung sowie der zeichnerischen Darstellung eines Ausführungsbeispiels.

In der Zeichnung zeigen:

Fig. 1    schematisch ein Gehäuse einer von der Erfindung Gebrauch machenden Förderpumpe;
Fig. 2    einen Gehäusedeckel des in Fig. 1 dargestellten Gehäuses;
Fig. 3    ein Zahnrad der in Fig. 1 dargestellten Förderpumpe;
Fig. 4    eine in Fig. 3 mit IV bezeichnete Ausschnittvergrößerung;
Fig. 5    eine Schnittdarstellung des in Fig. 3 dargestellten Zahnrads und
Fig. 6    eine in Fig. 5 mit VI bezeichnete Ausschnittvergrößerung und
Fig. 7    schematisch die Wirkungsweise der in Fig. 1 bis Fig. 6 dargestellten Förderpumpe und
Fig. 8    schematisch den Antrieb der in Fig. 1 bis Fig. 7.dargestellten Förderpumpe.

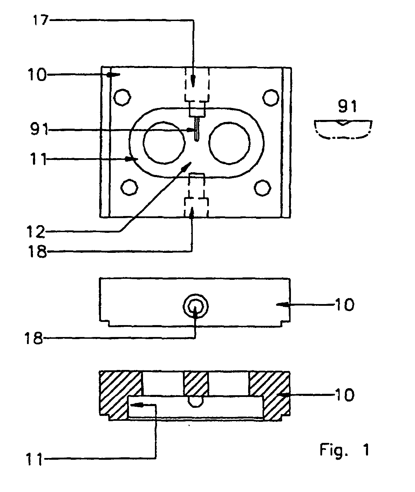

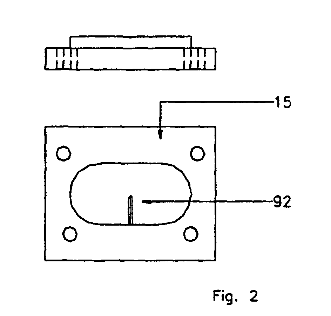

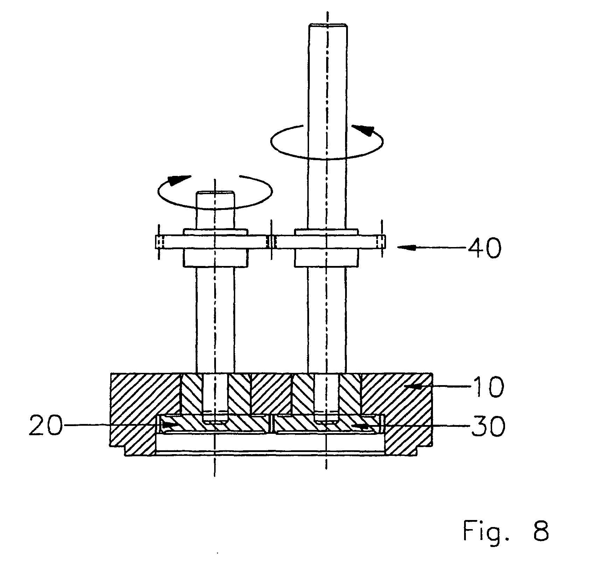

Eine Förderpumpe dargestellt in Fig. 1 bis Fig. 8 umfaßt ein Gehäuse 10, mit einer Aufnahme 11, für zwei Zahnräder 20, 30, die durch ein Vorschaltgetriebe 40 synchron zueinander gegenläufig antreibbar sind. Die Zahnräder 20, 30 sind in der Aufnahme 11 so angeordnet, dass zwischen einer die Aufnahme 11 begrenzenden Wand zwischen den Zahnrädern 20, 30 Spalten 51 angeordnet sind.

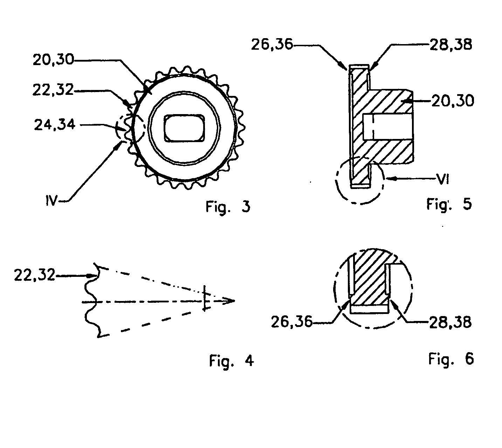

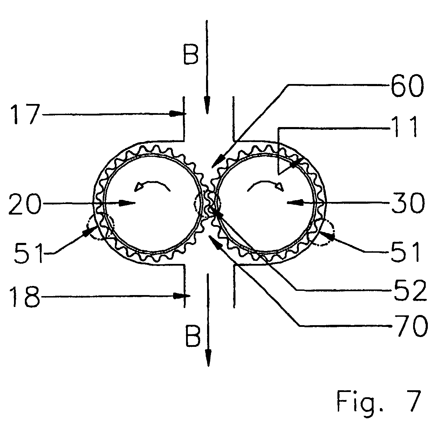

Ferner sind die Zahnräder 20, 30 so angeordnet, dass zwischen ihnen ein Spalt 52 angeordnet ist, dessen Breite den Spalten 51 zwischen den Zahnrädern 20, 30 und dem Gehäuse entsprechen. Die Spaltbreiten werden der Partikelgröße des auszubringenden Mediums angepasst. Wie insbesondere aus Fig. 3 und 4 hervorgeht, sind die Zahnräder 20, 30 gleich gross und annähernd sinusförmig verzahnt, wobei jeweils einem Zahn 22, 32 eine Ausnehmung 24, 34 gegenüberliegt, die zu dem Zahn 22, 32 komplementär ausgebildet ist, aber einen größeren Radius aufweist, so dass sich zwischen den Zähnen 22, 32 und den Ausnehmungen 24, 34 der Spalt 52 konstanter Spaltbreite ausbildet (siehe Fig. 7). Wie insbesondere aus Fig. 5 und Fig. 6 hervorgeht, können die Zahnräder 20, 30 vorteilhafterweise an ihrer Oberseite einen kreisförmig umlaufenden stegförmigen Abstandsring 26, 36 oder einen entsprechenden stufenförmigen Vorsprung aufweisen. An der Unterseite der Zahnräder 20, 30 ist ein weiterer Abstandsring 28, 38 bzw. ein weiterer stufenförmiger Vorsprung angeordnet. Zur Minimierung der Reibung berühren die beiden Zahnräder 20, 30 nur mit diesen Abstandsringen 26, 36 bzw. 28, 38 oder stufenförmigen Vorsprüngen den Gehäuseboden bzw. den Gehäusedeckel 15. Die Zahnräder werden nun synchron zueinander gegenläufig durch das Vorfeldgetriebe 40 angetrieben, wie es schematisch in Fig. 7 durch Pfeile angedeutet ist. Hierdurch wird ein viskoses Medium, insbesondere ein abrasives, Partikel enthaltendes Medium, durch einen Einlass 17 in das Innere der Förderpumpe gefördert und durch die Drehbewegung der Zahnräder entlang der äusseren Wandung des Aufnahmeraumes 11 gefördert. Die Förderrichtung ist in Fig. 7 mit durch den Buchstaben B gekennzeichneten Pfeilen dargestellt. Das geförderte Medium wird sodann durch einen Auslass 18 ausgegeben.

Da sich in einem Eingangsbereich 60 beim Fördern des Mediums ein Unterdruck einstellt, wohingegen in einem Bereich 70 benachbart zum Auslass 18 ein Überdruck aufbaut, sind sowohl in dem Gehäuseboden 12 als auch in dem Gehäusedeckel 15 Nuten 91, 92 vorgesehen, welche zum Ausgleich des Unter- bzw. Überdrucks dienen.

Die Drehgeschwindigkeit der Zahnräder 20, 30 wird nun in Abhängigkeit von der Verfahrgeschwindigkeit der das Medium ausbringenden (nicht dargestellten) Düse, die an dem Auslass 18 angeordnet wird, gesteuert dadurch, dass der Pumpenantrieb in die Bahnsteuerung einer Maschine zum Ausbringen des Mediums integriert ist. Bei einer hohen Verfahrgeschwindigkeit der Düse drehen sich die Zahnräder schneller als bei einer niedrigeren Verfahrgeschwindigkeit. Um auch bei einer Beschleunigung bzw. bei einer Verzögerung der Düse, die beispielsweise bei dem Aufbringen einer gekrümmten Raupe erforderlich werden, einen gleichmässigen Dosierquerschnitt zu erreichen, werden die Zahnräder 20, 30 in Abhängigkeit von der Beschleunigung bzw. Verzögerung geringfügig schneller bzw. geringfügig langsamer gedreht, wobei die Pumpendrehzahl proportional zu der mit einem Mengenfaktor multiplizierten Summe aus der Geschwindigkeit der Düse, deren Beschleunigung multipliziert mit einem Faktor A sowie des Geschwindigkeitsquadrats der Düse multipliziert mit einem Faktor B:

$$\text{Pumpendrehzahl} = \text{Mengenfaktor} \cdot (\text{Geschwindigkeit der}$$

$$\text{Düse} + \text{Beschleunigung der Düse} \cdot \text{Faktor A} + \text{Geschwin-}$$

$$\text{digkeitsquadrat} \cdot \text{Faktor B}).$$

Durch den in der Formal als Mengenfaktor bezeichneten Proportionalitätsfaktor kann die auszutragende Menge bestimmt werden, d.h. ob die Raupe dicker oder dünner ist. Der Faktor A dient zum Ausgleich von dynamischen Materialeigenschaften des auszubringenden Mediums und kompensiert insbesondere das nicht-Newton'sche Verhalten des auszubringenden Mediums und berücksichtigt so die Materialeigenschaften. Der Faktor B dient zum Ausgleich einer geschwindigkeitsabhängigen Nichtlinearität, die beispielsweise durch Leckage in der Pumpe und durch das Materialverhalten, insbesondere die Viskosität des auszubringenden Mediums entstehen kann. Auf diese Weise werden Verdickungen bzw. Verjüngungen der Dichtraupe vermieden. Der Auftragsquerschnitt der Raupe bleibt vielmehr unabhängig von der Verfahrgeschwindigkeit der Düse und unabhängig von dynamischen Eigenschaften des auszubringenden Materials konstant.

**Patentansprüche**

1. Verfahren zum dosierten Ausbringen eines Stranges eines viskosen Mediums, insbesondere eines feste Partikel enthaltenden abrasiven Mediums, mittels einer Düse, wobei man die Menge des Mediums in Abhängigkeit von der Geschwindigkeit der Düse ausbringt und in Abhängigkeit von der Beschleunigung oder Verzögerung der Düse erhöht bzw. verringert, **dadurch gekennzeichnet, dass** man die Pumpendrehzahl einer Förderpumpe gemäß folgender Formel bestimmt: Pumpendrehzahl = Mengenfaktor · (Geschwindigkeit der Düse + Beschleunigung der Düse · Faktor A + Geschwindigkeitsquadrat · Faktor B) , wobei der Mengenfaktor die insgesamt auszutragende Menge bestimmt, der Faktor A dynamische Materialeigenschaften des auszubringenden Mediums berücksichtigt und der Faktor B geschwindigkeitsabhängige Nichtlinearitäten berücksichtigt.

2. Verfahren nach Anspruch 1, **dadurch gekennzeichnet, dass** man die Konstanten Mengenfaktor, Faktor A, Faktor B abhängig von dem auszubringenden Medium messtechnisch bestimmt.

3. Förderpumpe zum Ausbringen eines Stranges eines viskosen, feste Partikel enthaltenden abrasiven Mediums, insbesondere zur Durchführung des Verfahrens gemäss einem der Ansprüche 1 bis 2, wobei zwei zur Ausführung einer gegenläufigen Drehung angetriebene, in einem Gehäuse (10) angeordnete Zahnräder (20, 30) vorgesehen sind, die zu Gehäusewänden Spalte bilden, **dadurch gekennzeichnet daß** die Zahnräder (20, 30) gleich groß und annähernd sinusförmig verzahnt sind, wobei jeweils einem Zahn (22, 32) eine Ausnehmung (24, 34) gegenüberliegt, die zu den Zähnen komplementär ausgebildet ist, aber einen größeren Radius aufweist, so daß sich zwischen den Zähnen (22, 32) und den Ausnehmungen (24, 34) ein Spalt (52) konstanter Spaltbreite ausbildet.

4.  Förderpumpe nach Anspruch 3, **dadurch gekennzeichnet, dass** sowohl in einem Gehäusedeckel (15) als auch in einem Gehäuseboden (12) jeweils eine von den beiden Zahnrädern (20, 30) gleich beabstandete Nut (92, 91) angeordnet ist.

5.  Förderpumpe nach Anspruch 4, **dadurch gekennzeichnet, dass** die Nut mit einem Einlass (17) und einem Auslass (18) der Förderpumpe fluchtet und sich eine vorgegebene Länge in dem Gehäuseboden (12) bzw. in dem Gehäusedeckel (15) erstreckt.

6.  Förderpumpe nach einem der Ansprüche 3 bis 5, **dadurch gekennzeichnet, dass** die Zahnräder (20, 30) an ihrer Ober- und Unterseite einen im wesentlichen kreisrunden, stegförmigen Abstandsring oder einen stufenförmigen Vorsprung aufweisen.

7.  Förderpumpe nach einem der Ansprüche 3 bis 6, **dadurch gekennzeichnet, dass** die Zahnräder (20, 30) aus einem oder mehreren der folgenden Materialien bestehen: Kunststoff, Keramik, antihaftbeschichtetes Metall, wobei die Beschichtung härter ist als die abrasiven Medien, durch harte anodische Beschichtungen beschichtetes Metall.

8.  Förderpumpe nach einem der Ansprüche 3 bis 7, **dadurch gekennzeichnet, dass** die Zahnräder (20, 30) durch ein Vorschaltgetriebe (40) synchron gegenläufig zueinander antreibbar sind, derart, dass sich ein Spalt zwischen den beiden Zahnrädern (20, 30) bildet.

**Claims**

1.  A method for the metered discharge of a string of a viscous medium, in particular an abrasive medium containing solid particles, by means of a nozzle, wherein the quantity of the medium is discharged in a manner dependent upon the speed of the nozzle and is increased or reduced in a manner dependent upon the acceleration or retardation of the nozzle, **characterized in that** the rotational speed of a feed pump is determined in accordance with the following formula: rotational speed of the pump = quantity factor · (speed of the nozzle + acceleration of the nozzle · factor **A** + square of the speed · factor **B**), wherein the quantity factor determines the total quantity to be discharged, the factor **A** takes into account dynamic material properties of the medium to be discharged and the factor **B** takes into account speed-dependent non-linearities.

2.  A method according to Claim 1, **characterized in that** the constants comprising the quantity factor, the factor **A** and the factor **B** are determined by measurement in a manner dependent upon the medium to be discharged.

3.  A feed pump for discharging a string of a viscous, abrasive medium containing solid particles, in particular for performing the method according to one of Claims 1 to 2, wherein two gearwheels (20, 30) are provided which are driven in order to perform a rotation in opposite directions and are arranged in a casing (10) and which form gaps with respect to the walls of the casing, **characterized in that** the gearwheels (20, 30) are of equal size and are toothed in a substantially sinusoidal manner, wherein each tooth (22, 32) has opposite it a recess (24, 34) which is formed in a complementary manner to the teeth but has a larger radius, so that a gap (52) of constant width is formed between the teeth (22, 32) and the recesses (24, 34).

4.  A feed pump according to Claim 3, **characterized in that** a groove (92, 91) spaced equally from the two gearwheels (20, 30) is provided both in a casing cover (15) and in a casing bottom (12).

5.  A feed pump according to Claim 4, **characterized in that** the groove is in alignment with an inlet (17) and an outlet (18) of the feed pump and extends for a pre-determined length in the casing bottom (12) and in the casing cover (15) respectively.

6.  A feed pump according to one of Claims 3 to 5, **characterized in that** on their topside and underside the gearwheels (20, 30) have a substantially circular web-like spacer ring or a step-like projection.

7. A feed pump according to one of Claims 3 to 6, **characterized in that** the gearwheels (20, 30) consist of one or more of the following materials: plastics material, ceramics, metal with a non-stick coating, wherein the coating is harder than the abrasive media, and metal coated with hard anodic coatings.

8. A feed pump according to one of Claims 3 to 7, **characterized in that** the gearwheels (20, 30) are capable of being driven in synchronism in opposite directions to each other by a gear mechanism (40) arranged in front, in such a way that a gap is formed between the two gearwheels (20, 30).

**Revendications**

1. Procédé pour la distribution dosée d'une barre à partir d'une matière visqueuse, en particulier d'une matière abrasive contenant des particules solides, au moyen d'une buse, dont le débit de matière est fourni en fonction de la vitesse de la buse, et augmente ou réduit en fonction de l'accélération ou du ralentissement de la buse,
**caractérisé en ce qu'**
on détermine la vitesse de rotation de la pompe d'une pompe d'alimentation selon la formule suivante : vitesse de rotation de la pompe = facteur de débit * (vitesse de la buse + accélération de la buse * facteur A + carré de la vitesse * facteur B), dans laquelle le facteur de débit détermine le débit à distribuer au total, le facteur A tient compte de propriétés dynamiques du matériau de la matière à distribuer et le facteur B tient compte de défauts de linéarité dépendant de la vitesse.

2. Procédé selon la revendication 1,
**caractérisé en ce qu'**
on détermine les constantes facteur de débit, facteur A et facteur B par des techniques de mesure en fonction de la matière à distribuer.

3. Pompe d'alimentation pour distribuer une barre d'une matière abrasive visqueuse contenant des particules solides, en particulier pour la mise en oeuvre du procédé selon l'une ou l'autre des revendications 1 ou 2, dans laquelle deux roues dentées (20, 30) disposées dans un corps (10) et entraînées de façon à exécuter une rotation en sens contraire, forment des fentes avec les parois du corps,
**caractérisée en ce que**
les roues dentées (20, 30) sont de même taille et sont dentées de façon sensiblement sinusoïdale, une dent (22, 32) faisant face respectivement à une cavité (24, 34) de forme complémentaire aux dents, mais qui présente un rayon plus grand, de telle façon qu'il se forme entre les dents (22, 32) et les cavités (24, 34) une fente (52) avec une largeur de fente constante.

4. Pompe d'alimentation selon la revendication 3,
**caractérisée en ce qu'**
une rainure (92, 91) également distante des deux roues dentées (20, 30) est respectivement disposée aussi bien dans un couvercle de corps (15) que dans un fond de corps (12).

5. Pompe d'alimentation selon la revendication 4,
**caractérisée en ce que**
la rainure est située dans l'alignement d'une entrée (17) et d'une sortie (18) de la pompe d'alimentation et s'étend sur une longueur prédéterminée dans le fond de corps (12) ou dans le couvercle de corps (15).

6. Pompe d'alimentation selon l'une quelconque des revendications 3 à 5,
**caractérisée en ce que**
les roues dentées (20, 30) présentent, sur leur côté supérieur et inférieur, une bague d'écartement en forme de nervure sensiblement circulaire ou une saillie étagée.

7. Pompe d'alimentation selon l'une quelconque des revendications 3 à 6,
**caractérisée en ce que**
les roues dentées (20, 30) sont constituées d'une ou de plusieurs des matières suivantes : matière plastique, céramique, métal à revêtement anti-adhérence, le revêtement étant plus dur que les matières abrasives, métal revêtu par des revêtements anodiques durs.

8. Pompe d'alimentation selon l'une quelconque des revendications 3 à 7,
**caractérisée en ce que**
les roues dentées (20, 30) peuvent être entraînées de manière synchrone en sens contraire l'une de l'autre par un engrenage de tête (40), de telle façon qu'il se forme une fente entre les deux roues dentées (20, 30).

17

10

91

11

91

12

18

18

10

10

11

Fig. 1

Fig. 2

20,30

22,32

24,34

IV

Fig. 3

22,32

Fig. 4

26,36

28,38

20,30

VI

Fig. 5

26,36

28,38

Fig. 6

Fig. 7

Fig. 8